(19) Europäisches Patentamt

European Patent Office

Office européen des brevets

(11) **EP 4 610 885 A2**

(12) **EUROPEAN PATENT APPLICATION**

(43) Date of publication:
03.09.2025 Bulletin 2025/36

(21) Application number: 25154228.8

(22) Date of filing: 27.01.2025

(51) International Patent Classification (IPC):
**G06N 3/065** (2023.01)       **G06N 3/0464** (2023.01)

(52) Cooperative Patent Classification (CPC):
**G06N 3/0464; G06N 3/065**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.02.2024   KR 20240029909**
**30.04.2024   KR 20240057753**

(71) Applicant: **Korea Advanced Institute of Science and Technology**
**Daejeon (KR)**

(72) Inventors:
• **YANG, Heejun**
  **Daejeon (KR)**
• **HONG, Heemyoung**
  **Daejeon (KR)**

(74) Representative: **Marks & Clerk LLP**
**15 Fetter Lane**
**London EC4A 1BW (GB)**

(54) **NEUROMORPHIC COMPUTING DEVICE**

(57)    Disclosed is a neuromorphic computing device, which includes an input voltage generator that generates a plurality of input voltages based on input data, a gate voltage generator that generates a plurality of gate voltages based on the input data, and a convolution computing device including a synapse array circuit to which the plurality of input voltages and the plurality of gate voltages are applied, and the synapse array circuit includes a plurality of synapse elements, and the synapse element is a memristor element including a drain terminal to which one of the plurality of input voltages is applied and a gate terminal to which one of the plurality of gate voltages is applied.

FIG. 4

## Description

### CROSS-REFERENCE TO RELATED APPLICATIONS

This application claims priority under 35 U.S.C. § 119 to Korean Patent Application Nos. 10-2024-0029909 filed on February 29, 2024, and 10-2024-0057753 filed on April 30, 2024, in the Korean Intellectual Property Office, the disclosures of which are incorporated by reference herein in their entireties.

### BACKGROUND

Embodiments of the present disclosure described herein relate to a neuromorphic computing device, and more particularly, relate to a device that performs computations in a dynamic convolution neural network including an attention layer.

This research is conducted with support from the Samsung Future Technology Promotion Project (Project Number: (SRFC-MA1701-52).

A memristor element is one of the elements used in memory devices or logic circuits. The memristor element is used to represent memories and registers. Unlike traditional semiconductor devices, memristors provide a new type of memory technology. The memristors maintain their state through electrical characteristics and may be considered as a type of non-volatile memory. These elements may change their state through electrical signals, and that state may be read and written electrically. Compared to existing semiconductor devices, the memristors have advantages in terms of energy efficiency and space efficiency, and may provide faster data access speeds and higher storage capacity.

The memristors are currently being technologically researched and their use in various application fields is being studied. These applications may include computer memory, artificial intelligence systems, neural network-based computing, Internet of Things (IoT) devices, etc.

### SUMMARY

Embodiments of the present disclosure provide a device that performs computations of a dynamic convolution neural network.

According to an embodiment of the present disclosure, a neuromorphic computing device includes an input voltage generator that generates a plurality of input voltages based on input data, a gate voltage generator that generates a plurality of gate voltages based on the input data, and a convolution computing device including a synapse array circuit to which the plurality of input voltages and the plurality of gate voltages are applied, and the synapse array circuit includes a plurality of synapse elements, and the synapse element is a memristor element including a drain terminal to which one of the plurality of input voltages is applied, a gate terminal to which one of the plurality of gate voltages is applied, and a source terminal connected to an output electrode line.

According to an embodiment of the present disclosure, a device of performing a dynamic convolution computing includes a plurality of input electrodes to which a plurality of input voltages are applied, a plurality of input electrode lines connected to the plurality of input electrodes, a plurality of gate electrodes to which a plurality of gate voltages are applied, a plurality of gate electrode lines connected to the plurality of gate electrodes, a plurality of synapse elements connected to the plurality of gate electrode lines and the plurality of input electrode lines, and a plurality of output electrode lines connected to the plurality of synapse elements, and the plurality of input voltages include information about a plurality of components of input data, the plurality of synapse elements include information about a plurality of components of a kernel, and the plurality of gate voltages include a plurality of attention weight information.

### BRIEF DESCRIPTION OF THE FIGURES

The above and other objects and features of the present disclosure will become apparent by describing in detail embodiments thereof with reference to the accompanying drawings.

FIG. 1 is a diagram illustrating an example of a dynamic convolution neural network.
FIG. 2 is a diagram illustrating an example of a dynamic convolution computing performed in a first dynamic convolution layer of FIG. 1.
FIG. 3 is a diagram illustrating an example in which a convolution computing is performed by applying a first kernel to an input image.
FIG. 4 is a block diagram illustrating an example of a neuromorphic computing device, according to an embodiment of the present disclosure.
FIG. 5 is a diagram illustrating an example of an input voltage generator in an embodiment of FIG. 4.
FIG. 6 is a diagram illustrating an example of a gate voltage generator in an embodiment of FIG. 4.
FIG. 7 is a diagram illustrating a synapse array circuit in an embodiment of FIG. 4.
FIG. 8 is a diagram illustrating a synapse element in an embodiment of FIG. 7.
FIG. 9 is a graph illustrating an example of applying a program voltage to a synapse element of FIG. 8.
FIG. 10 is a graph illustrating an example of applying a gate voltage to a synapse element of FIG. 8.

### DETAILED DESCRIPTION

Hereinafter, embodiments of the present disclosure will be described in detail and clearly to such an extent that an ordinary one in the art easily implements the present disclosure.

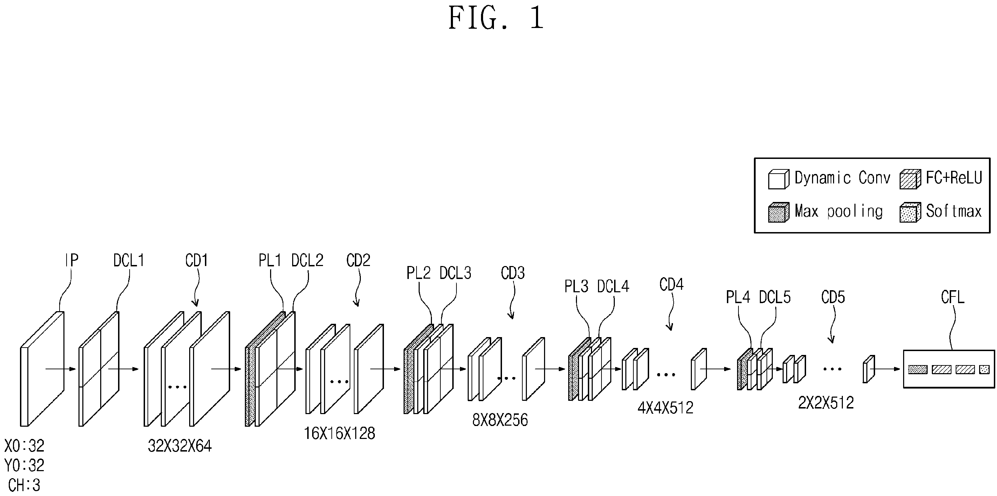

FIG. 1 is a diagram illustrating an example of a dynamic convolution neural network.

Referring to FIG. 1, a dynamic convolution neural network is provided for classifying input data IP. In an example, a dynamic convolution neural network based on the VGG11 artificial neural network architecture is representatively described, but is not limited thereto. In an example, the input data IP is image data having a size of 32x32 with 32 pixels in width "X" and 32 pixels in height "Y", and each pixel has three channels CH corresponding to RGB colors, respectively.

A dynamic convolution neural network may include a plurality of dynamic convolution layers, a plurality of pooling layers, and a classification layer. For example, the plurality of dynamic convolution layers may include first to fifth dynamic convolution layers DCL1 to DCL5. For example, the plurality of pooling layers may include first to fourth pooling layers PL1 to PL4.

Each of the plurality of dynamic convolution layers may output convolution data by applying a plurality of kernel series based on input image data. In this specification, applying the kernel series to data means performing a convolution computation on the data using kernels of the kernel series. Each of the plurality of kernel series may include a plurality of kernels. In each dynamic convolution layer, kernel components of the kernel series may have different values.

Each of the plurality of kernel series may correspond to a plurality of classes into which input image data is classified. For example, a first kernel series KS1 corresponds to a first class of image data, a second kernel series KS2 corresponds to a second class of image data, a third kernel series KS3 corresponds to a third class of image data, and a fourth kernel series KS4 corresponds to a fourth class of image data.

Each of the plurality of dynamic convolution layers may include an attention layer. The attention layer may classify image data input to the dynamic convolution layer into a plurality of classes and may output a plurality of attention weights based on the classification results.

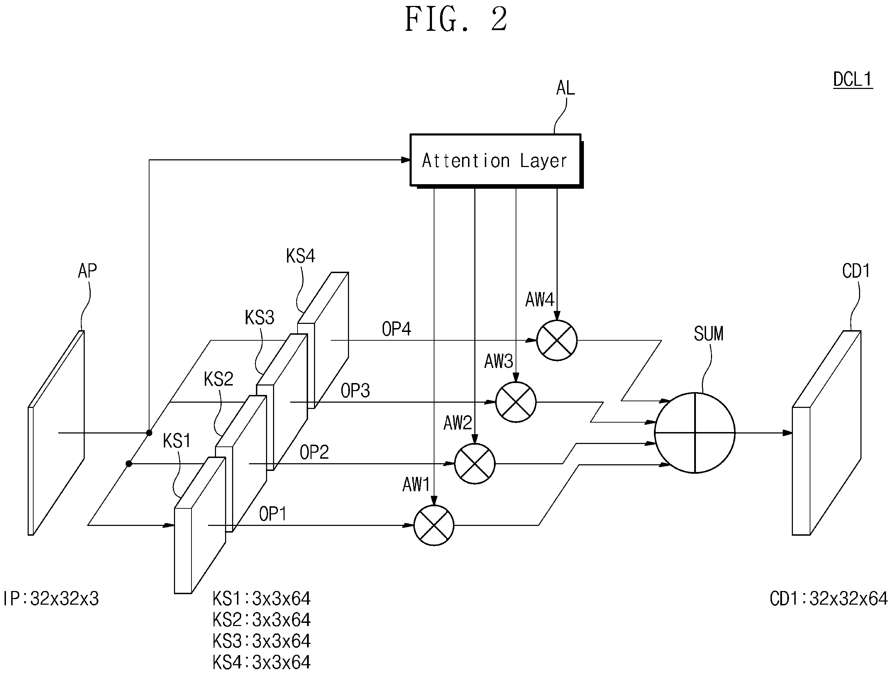

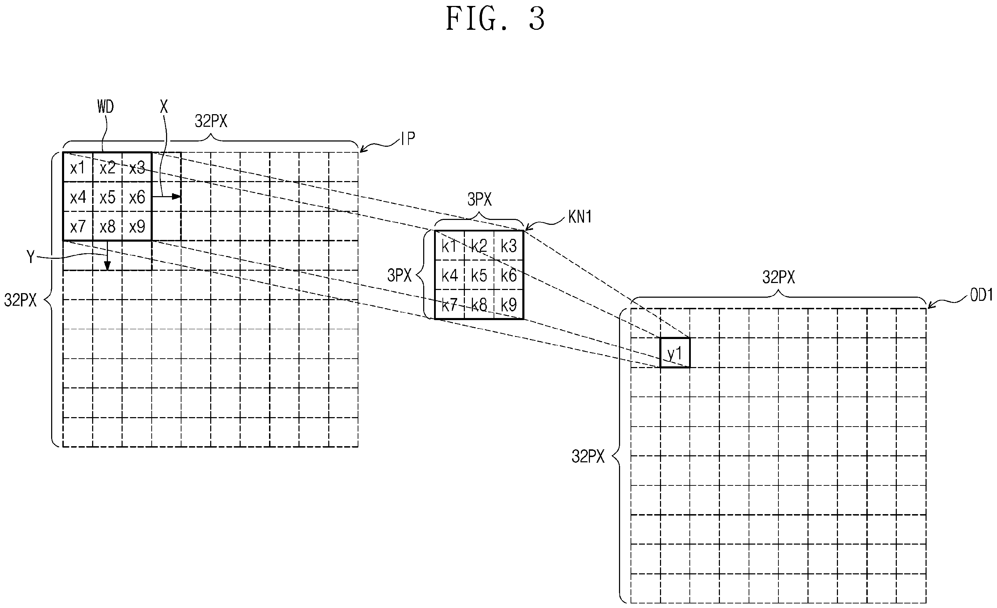

The dynamic convolution layer may perform a dynamic convolution computing using the plurality of kernel series and the plurality of attention weights. The detail method of the dynamic convolution computing will be described later with reference to FIGS. 2 and 3.

Each of the plurality of pooling layers may output sampling data by reducing the dimension of the input image data. For example, the pooling layer may output the sampling data by selecting the maximum value among the components belonging to an area having a 2x2 size in the image data. For example, the horizontal size of the sampling data is half the horizontal size of the input image data, and the vertical size of the sampling data is half the vertical size of the image data. However, the pooling layer is not limited to thereto and may select the maximum value among components belonging to areas of different sizes, such as 3x3 or 4x4. In an example, the pooling layer is a max pooling layer.

The convolution data output from the dynamic convolution layer may be provided as input to the pooling layer or classification layer of a subsequent stage, and the sampling data output from the pooling layer may be provided as input to the dynamic convolution layer of a subsequent stage.

For example, the first dynamic convolution layer DCL1 may output a first convolution data CD1 of 32x32x64 with size 32x32 and length 64 by applying the plurality of kernel series with a length of 64 to the input data IP of size 32x32. The length of the kernel series may refer to the number of kernels included in the kernel series. For example, in the first dynamic convolution layer DCL1, each kernel series may include 64 kernels, and in this case, the length of the kernel series is 64.

The first pooling layer PL1 may reduce the dimension of the first convolution data CD1 to output sampling data of size 16x16x64, and the second dynamic convolution layer DCL2 may apply the plurality of kernel series with a length of 128 to the sampling data to output a second convolution data CD2 of size 16x16x128.

The second pooling layer PL2 may reduce the dimension of the second convolution data CD2 to output sampling data of size 8x8x128, and the third dynamic convolution layer DCL3 may apply the plurality of kernel series with a length of 256 to the sampling data to output a third convolution data CD3 of size 8x8x256.

The third pooling layer PL3 may reduce the dimension of the third convolution data CD3 to output sampling data of size 4x4x256, and the fourth dynamic convolution layer DCL4 may apply the plurality of kernel series with a length of 512 to the sampling data to output a fourth convolution data CD4 of size 4x4x512.

The fourth pooling layer PL4 may reduce the dimension of the fourth convolution data CD4 to output sampling data of size 2x2x512, and the fifth dynamic convolution layer DCL5 may apply the plurality of kernel series with a length of 512 to the sampling data to output a fifth convolution data CD5 of size 2x2x512.

A classification layer CFL may output classification results of classifying classes based on the fifth convolution data CD5. For example, the classification layer CFL may include a max pooling layer, a fully connected layer, an activation layer, and an output layer. The max pooling layer may reduce the dimension of the fifth convolution data CD5 so as to be input to the fully connected layer, the activation layer may apply an activation function to the output of the fully connected layer, and the output layer may apply a softmax function to the output of the activation layer to output a probability of belonging to each class through an output node. The classification layer CFL may output classification results based on the maximum value of outputs of output nodes.

Since the image data input to the attention layer in each dynamic convolution layer of the dynamic convolution neural network are different, the attention weights assigned to the plurality of kernel series in each dynamic convolution layer may be different. For example, the values of the plurality of attention weights output from the attention layer of a first dynamic convolution neural network may be different from the values of the plurality of attention weights output from the attention layer of a second dynamic convolution neural network.

FIG. 2 is a diagram illustrating an example of a dynamic convolution computing performed in a first dynamic convolution layer of FIG. 1. FIG. 3 is a diagram illustrating an example in which a convolution computing is performed by applying a first kernel to an input image. Hereinafter, the first dynamic convolution layer DCL1 will be representatively described, but a size or a length of the kernel series, or a value of the kernel component may vary in each of the second to fifth dynamic convolution layers DCL2 to DCL5 of FIG. 1.

Referring to FIG. 2, the first dynamic convolution layer DCL1 may perform a dynamic convolution computing on the input data IP to output the first convolution data CD1. The input data IP has a size of 32x32 and includes 3 channels corresponding to 3 colors, RGB.

The first dynamic convolution layer DCL1 may perform a dynamic convolution computing using the first to fourth kernel series KS1 to KS4 and attention weights. The first kernel series KS1 includes 64 first kernels with a size of 3x3, the second kernel series KS2 includes 64 second kernels with a size of 3x3, the third kernel series KS3 includes 64 third kernels with a size of 3x3, and the fourth kernel series KS4 includes 64 fourth kernels with a size of 3x3.

As a result of applying all first kernels of the first kernel series KS1 to the input data IP, first output data OP1 may be generated. For example, in the input data IP of size 32X32, all 64 first kernels of the first kernel series KS1 are applied to first channel (e.g., a channel corresponding to the R color) components, all 64 first kernels of the first kernel series KS1 are applied to second channel (e.g., a channel corresponding to the G color) components, and all 64 first kernels of the first kernel series KS1 are applied to a third channel (e.g., a channel corresponding to the B color) components. Afterwards, the first output data OP1 is generated by adding all the components at corresponding positions in the computation result data for the 64 first kernels. Accordingly, the first output data OP1 may be 32x32x64 data with a size of 32x32 and a length of 64.

Referring to FIG. 3, an example is provided in which a convolution computing is performed by applying one first kernel of the first kernel series KS1 to the input data IP. In an example, each component of input data IP may mean a component of any one of three channels. In another example, each component of the input data IP may mean the sum of the components of all three channels.

A 3x3 window WD with a size of 3 pixels horizontally and 3 pixels vertically is defined on the input data IP. The size of the window WD is the same as the size of a first kernel KN1. Components on the window WD of the input data IP may be multiplied by components at corresponding positions of the first kernel KN1, and then a convolution computation result in which all the multiplied values are added may be output.

For example, a convolution computation result of first to ninth components x1 to x9 on the window WD of the input data IP and the first to ninth components k1 to k9 of the first kernel KN1 may be expressed as Equation 1 below.

【Equation 1】

$$y1 = \sum_{i=1}^{9} xi * ki$$

The window WD may move depending on a predetermined direction on the input data IP. Below, the movement of various windows WD is described using the term "position". For example, the position of the window WD may indicate the position of a specific component (e.g., the top and leftmost component within the window WD) belonging to the window WD on the input data IP. For example, the position of the window WD may indicate that a specific component is overlapped with which pixel data of pixel data of the input data IP in a horizontal direction "X" and in a vertical direction "Y".

For example, the window WD may move in units of 1 pixel along the horizontal direction "X" from the leftmost side to the rightmost side. When the window WD moves to the rightmost side, the window WD may move by 1 pixel in the vertical direction "Y" and may move to the position of the leftmost side. Afterwards, the window WD may move in units of 1 pixel along the horizontal direction "X" from the leftmost side to the rightmost side. At each position of the window WD, a convolution computing may be performed on components of the input data IP on the window WD and components of the first kernel KN1.

As a result of applying the input data IP to the first kernel KN1 at all positions, one piece of data is output. In the same way, after all remaining first kernels of the first kernel series KS1 are applied to the input data IP, the first output data OP1 is generated as a result of adding all the output data.

Referring again to FIG. 2, in the same manner as the method of generating the first output data OP1 described in FIG. 3, second output data OP2 may be generated by applying the second kernels of the second kernel series KS2 to the input data IP, third output data OP3 may be generated by applying the third kernels of the third kernel series KS3 to the input data IP, and fourth output data OP4 may be generated by applying the fourth kernels of the fourth kernel series KS4 to the input data IP.

The first dynamic convolution layer DCL1 may include an attention layer AL. The attention layer AL may further include a simple classification layer for classifying the input data IP. For example, the simple classification layer may include an average pooling layer, a fully connected layer, an activation layer, and an output layer. The attention layer AL may generate classification results by applying the simple classification layer based on the input data IP.

The attention layer AL may output first to fourth attention weights AW1 to AW4 corresponding to first to fourth classes based on the classification result of the simple classification layer. For example, the attention layer AL may generate classification results in which the input data IP has an 80% probability of belonging to the first class, has a 10% probability of belonging to the second class, has a 10% probability of belonging to the third class, and has a 0% probability of belonging to the fourth class. In this case, the value of the first attention weight AW1 corresponding to the first class is 0.8, the value of the second attention weight AW2 corresponding to the second class is 0.1, the value of the third attention weight AW3 corresponding to the third class is 0.1, and the value of the fourth attention weight AW4 corresponding to the fourth class is 0.

Each of the plurality of attention weights output from the attention layer AL is assigned to the corresponding kernel series. In detail, the plurality of attention weights may be multiplied by the output data of the corresponding kernel series. For example, the first attention weight AW1 is multiplied by the first output data OP1 of the first kernel series KS 1 corresponding to the first class, the second attention weight AW2 is multiplied by the second output data OP2 of the second kernel series KS2 corresponding to the second class, the third attention weight AW3 is multiplied by the third output data OP3 of the third kernel series KS3 corresponding to the third class, and the fourth attention weight AW4 is multiplied by the fourth output data OP4 of the fourth kernel series KS4 corresponding to the fourth class. The first convolution data CD1 may be output by adding all components at corresponding positions in the data of the computation results with respect to the first to fourth output data OP1 to OP4 and the first to fourth attention weights AW1 to AW4.

In a trained dynamic convolution neural network, the components of the kernels of the kernel series may be fixed when a dynamic convolution computing in each dynamic convolution layer is performed. However, the attention weight output from the attention layer AL of each dynamic convolution layer may have different values depending on the input data IP. In detail, in a dynamic convolution neural network, the attention weight output from the attention layer AL may dynamically change depending on the input data IP.

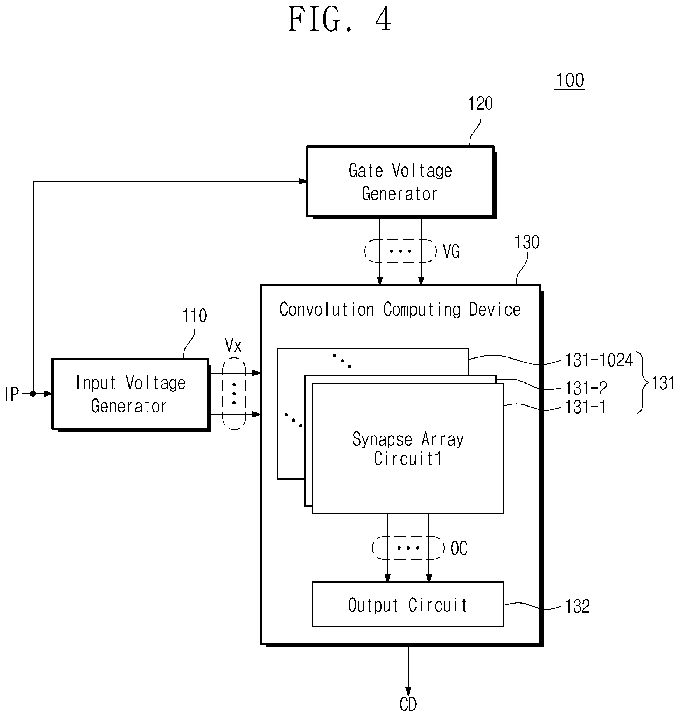

The present disclosure provides a neuromorphic computing device that performs both a kernel convolution computation and an attention weight multiplication computation in the above-described dynamic convolution neural network. Hereinafter, an embodiment of the neuromorphic computing device according to the present disclosure will be described with reference to FIGS. 4 to 10.

FIG. 4 is a block diagram illustrating an example of a neuromorphic computing device, according to an embodiment of the present disclosure.

Referring to FIG. 4, a neuromorphic computing device 100 may include an input voltage generator 110, a gate voltage generator 120, and a convolution computing device 130. The neuromorphic computing device 100 may be configured to perform a dynamic convolution computing based on input data IP to output convolution data CD.

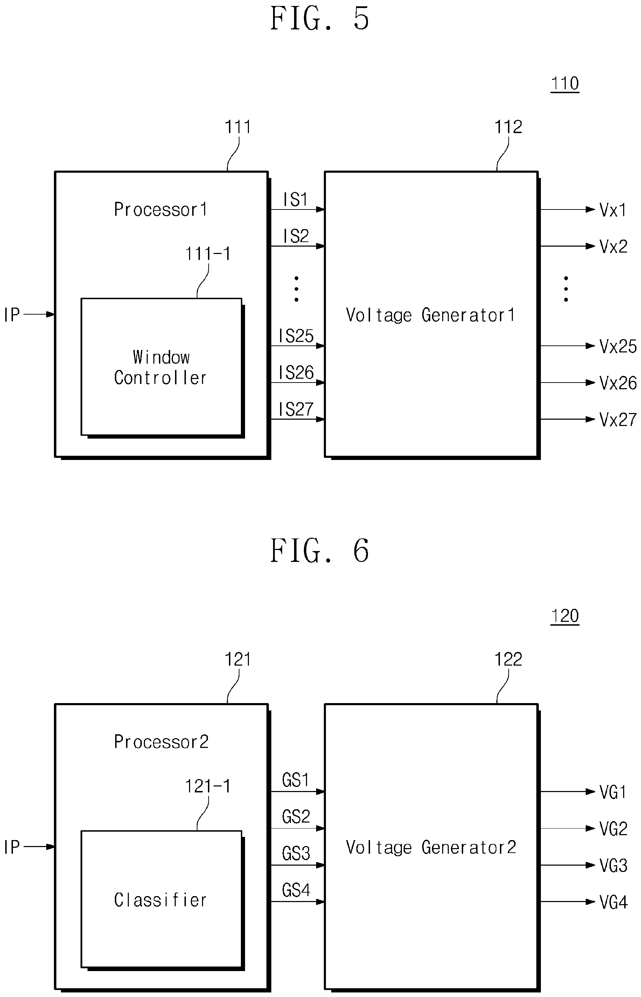

The input voltage generator 110 may be configured to receive the input data IP. The input voltage generator 110 may be configured to generate a plurality of input voltages Vx based on the input data IP. The magnitudes of the plurality of input voltages Vx correspond to the plurality of components on the window WD of the input data IP, respectively. The number of the plurality of input voltages Vx is the same as the number of components of the kernel that performs the convolution computing. Details on the configuration and operation of the input voltage generator 110 will be described later with reference to FIG. 5.

The gate voltage generator 120 may be configured to receive the input data IP. The gate voltage generator 120 may be configured to generate a plurality of gate voltages VG based on the input data IP. The gate voltage generator 120 may be configured to classify the input data IP into a plurality of classes and to generate the plurality of gate voltages VG based on the classification results. The magnitudes of the plurality of gate voltages VG are set based on the classification results classified into a plurality of classes. The plurality of gate voltages VG include information about the plurality of attention weights. The number of attention weights is the same as the number of classes. Details about the configuration and operation of the gate voltage generator 120 will be described later with reference to FIG. 6.

The convolution computing device 130 may be configured to receive the plurality of input voltages Vx and the plurality of gate voltages VG. The convolution computing device 130 may be configured to generate a plurality of output currents OC based on the plurality of input voltages Vx and the plurality of gate voltages VG, and to output the convolution data CD based on a value obtained by adding the values of the plurality of output currents OC.

The convolution computing device 130 may include a plurality of synapse array circuits 131. The number of synapse array circuits 131 may be the same as the number of pixels of the input data IP. For example, when the input data IP of size 32x32 is input, 32x32=1024 synapse array circuits may be provided. Each synapse array circuit may output a current including information about one pixel of the convolution data.

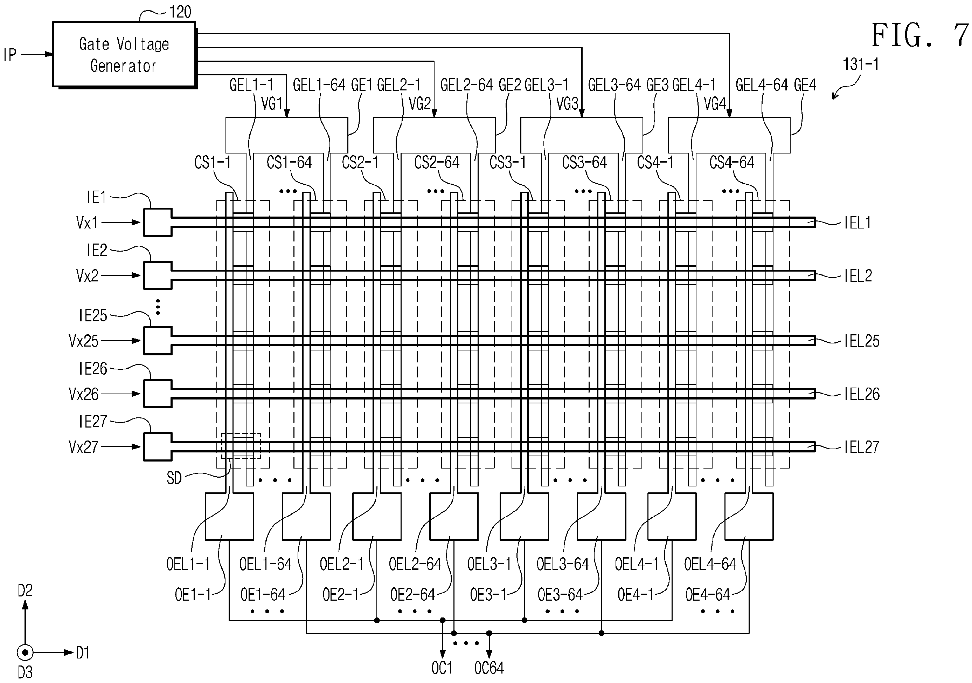

The plurality of input voltages Vx and the plurality of gate voltages VG may be applied to each synapse array circuit. Each synapse array circuit includes a plurality of synapse elements. One input voltage and one gate voltage may be applied to one synapse element. Each synapse element may perform one computation based on one input data component corresponding to one input voltage, one attention weight corresponding to one gate voltage, and one kernel component corresponding to one electric resistance layer. Details on the configuration and operation of the synapse array circuit will be described later with reference to FIG. 7.

The convolution computing device 130 may include an output circuit 132. The output circuit 132 may be configured to receive the plurality of output currents OC output from the plurality of synapse array circuits 131. The output circuit 132 may be configured to output the convolution data CD based on the values of the plurality of output currents OC. For example, each pixel value of the convolution data may correspond to each of the output currents of a plurality of synapse array circuits 131-1 to 131-1024.

FIG. 5 is a diagram illustrating an example of an input voltage generator in an embodiment of FIG. 4. Referring to FIG. 5, the input voltage generator 110 may include a first processor 111 and a first voltage generator 112.

The first processor 111 may be configured to generate a plurality of input signals based on the input data IP. The number of the plurality of input signals may be the same as the value obtained by multiplying the size of the kernel by the number of channels of each pixel. For example, when the kernel has a size of 3x3 and each pixel of the input data IP has 3 RGB channels, the first processor 111 may generate 27 input signals IS1 to IS27. Each input signal corresponds to a component corresponding to one channel of one pixel of the input data IP. The first processor 111 may include a window controller 111-1 for selecting basic components of the plurality of input signals IS1 to IS27 on the input data IP.

The window controller 111-1 may set the window WD having the same size as the kernel size on the input data IP. For example, the window is a square of which the horizontal length is the same as the vertical length. For example, the window controller 111-1 may set the window WD of size 3x3. The first processor 111 may be configured to generate the plurality of input signals IS1 to IS27 based on a plurality of components of the window WD on the input data IP. Each of the plurality of input signals IS1 to IS27 may include information about components of the corresponding input data IP.

Referring to FIG. 3, for example, the first input signal IS1 may include information about a first component x1 of the first channel in the window WD on the input data IP, the second input signal IS2 may include information about a second component x2 of the first channel in the window WD on the input data IP, the 25th input signal IS25 may include information about a seventh component x7 of the third channel in the window WD on the input data IP, the 26th input signal IS26 may include information about an eighth component x8 of the third channel in the window WD on the input data IP, and the 27th input signal IS27 may include information about the ninth component x9 of the third channel in the window WD on the input data IP.

The window controller 111-1 may move the position of the window WD on the input data IP. For example, the window controller 111-1 may move the window WD in units of 1 pixel along the horizontal direction "X" from the leftmost side to the rightmost side on the input data (refer to FIG. 3). When the window WD moves to the rightmost side, the window controller 111-1 may move the window WD by 1 pixel in the vertical direction "Y" so as to be moved to the leftmost position. Afterwards, the window controller 111-1 may move the window WD in units of 1 pixel along the horizontal direction "X" from the leftmost side to the rightmost side. For each position of the window WD, the first processor 111 may generate a plurality of input signals IS1 to IS27 based on a plurality of components of the input data IP on the window WD.

The first processor 111 may include hardware such as at least one of a microprocessor, a microcontroller, and/or a logic device capable of performing functions similar to these.

The input voltage generator 110 may further include a memory. The memory may store commands that, when executed by the first processor 111, control the first processor 111 to perform one or more various methods of operation. The memory may be a non-transitory computer-readable storage medium (e.g., a non-volatile memory such as a flash memory or a volatile memory such as a DRAM). The memory may store the input data IP, and the first processor 111 may generate input voltages based on the input data IP stored in the memory.

The first voltage generator 112 may generate the plurality of input voltages Vx1 to Vx27 based on the plurality of input signals IS1 to IS27. For example, the first voltage generator 112 may include a plurality of voltage generators. Each of the plurality of voltage generators may output one input voltage based on one input signal. For example, the first voltage generator 112 may generate the first input voltage Vx1 based on the first input signal IS1 and may generate the second input voltage Vx2 based on the second input signal IS2.

The magnitude of each of the plurality of input voltages Vx1 to Vx27 is determined based on the corresponding input signal. In an embodiment, the magnitude of the input voltage is determined based on the magnitude of the component of the input data IP. For example, when the first component x1 of the input data IP included in the first input signal IS1 is greater than the second component x2 included in the second input signal IS2, the magnitude of the first input voltage Vx1 may be greater than the magnitude of the second input voltage Vx2.

FIG. 6 is a diagram illustrating an example of a gate voltage generator in an embodiment of FIG. 4. Referring to FIG. 6, the gate voltage generator 120 may include a second processor 121 and a second voltage generator 122.

The second processor 121 may be configured to generate a plurality of gate signals GS1 to GS4 based on the input data IP. The second processor 121 may be configured to classify the input data IP into a plurality of classes and to generate a plurality of gate signals GS1 to GS4 based on the classification results. The number of gate signals GS 1 to GS4 may be the same as the number of classes. The second processor 121 may include a classifier 121-1 for classifying the input data IP.

The classifier 121-1 may be configured to generate a plurality of attention weight information by applying an attention layer to the input data IP. For example, the attention layer may include an average pooling layer, a fully connected layer, an activation layer, and an output layer. The plurality of attention weight information may be output from a plurality of output nodes of the output layer. The number of plurality of attention weight information may be the same as the number of classes to be classified.

The plurality of attention weight information correspond to a plurality of classes. The value of each attention weight information may be determined based on the probability of belonging to the corresponding class. For example, the classifier 121-1 may generate classification results in which the input data IP has an 80% probability of belonging to the first class, has a 10% probability of belonging to the second class, has a 10% probability of belonging to the third class, and has a 0% probability of belonging to the fourth class. In this case, the value of the first attention weight information corresponding to the first class may be 0.8, the value of the second attention weight information corresponding to the second class may be 0.1, the value of the third attention weight information corresponding to the third class may be 0.1, and the value of the fourth attention weight information corresponding to the fourth class may be 0.

The second processor 121 may be configured to output the plurality of gate signals GS1 to GS4 based on the plurality of attention weight information. Each of the plurality of gate signals GS1 to GS4 may include the corresponding attention weight information. For example, the first gate signal GS 1 may include the first attention weight information, the second gate signal GS2 may include the second attention weight information, the third gate signal GS3 may include the third attention weight information, and the fourth gate signal GS4 may include the fourth attention weight information.

The second processor 121 may include hardware such as at least one of a microprocessor, a microcontroller, and/or a logic device capable of performing functions similar to these.

The gate voltage generator 120 may further include a memory. The memory may store commands that, when executed by the second processor 121, control the second processor 121 to perform one or more various methods of operation. The memory may be a non-transitory computer-readable storage medium (e.g., a non-volatile memory such as a flash memory or a volatile memory such as a DRAM). The memory may store the input data IP, and the second processor 121 may generate gate voltages based on the input data IP stored in the memory.

The second voltage generator 122 may generate the plurality of gate voltages VG1 to VG4 based on the plurality of gate signals GS1 to GS4. For example, the second voltage generator 122 may include a plurality of voltage generators. Each of the plurality of voltage generators may output one gate voltage based on one gate signal. For example, the second voltage generator 122 may generate the first gate voltage VG1 based on the first gate signal GS1, generate the second gate voltage VG2 based on the second gate signal GS2, generate the third gate voltage VG3 based on the third gate signal GS3, and generate the fourth gate voltage VG4 based on the fourth gate signal GS4.

The magnitude of each of the plurality of gate voltages VG1 to VG4 may be determined based on the corresponding gate signal. In an embodiment, the magnitude of the gate voltage may be determined based on the value of attention weight information included in the gate signal. For example, when the value of the first attention weight information included in the first gate signal GS 1 may be greater than the value of the second attention weight information included in the second gate signal GS2, the magnitude of the first gate voltage VG1 may be greater than the magnitude of the second gate voltage VG2.

FIG. 7 is a diagram illustrating a synapse array circuit in an embodiment of FIG. 4. Hereinafter, with reference to FIG. 7, the first synapse array circuit 131-1 (hereinafter referred to as the synapse array circuit) among the plurality of synapse array circuits 131 will be representatively described.

The synapse array circuit 131-1 may include a plurality of input electrode lines. The number of input electrode lines is the same as the number of input voltages. For example, first to twenty-seventh input electrode lines IEL1 to IEL27 corresponding to the first to twenty-seventh input voltages Vx1 to Vx27 are provided. The plurality of input electrode lines extend along a first direction D1.

The synapse array circuit 131-1 may include a plurality of input electrodes. Each input electrode is connected to the corresponding input electrode line. The plurality of input voltages are applied to the input electrode lines through the plurality of input electrodes. For example, the first to twenty-seventh input voltages Vx1 to Vx27 are applied to the first to twenty-seventh input electrode lines IEL1 to IEL27 through first to twenty-seventh input electrodes IE1 to IE27.

The input electrode line and the input electrode may include a conductive material. For example, the conductive material may include silver "Ag" element.

The synapse array circuit 131-1 may include a plurality of gate electrodes. The number of gate electrodes is the same as the number of gate voltages. For example, first to fourth gate electrodes GE1 to GE4 corresponding to the first to fourth gate voltages VG1 to VG4 may be provided. As another example, when a gate voltage the same as the number of attention weights may be applied, the number of gate electrodes may not be the same as the number of gate voltages.

The plurality of gate electrode lines may be connected to each gate electrode. A plurality of first gate electrode lines GEL1-1 to GEL1-64 may be connected to the first gate electrode GE1, a plurality of second gate electrode lines GEL2-1 to GEL2-64 may be connected to the second gate electrode GE2, a plurality of third gate electrode lines GEL3-1 to GEL3-64 may be connected to the third gate electrode GE3, and a plurality of fourth gate lines GEL4-1 to GEL4-64 may be connected to the fourth gate electrode GE4. A plurality of gate electrode lines may extend along a second direction D2. The second direction D2 may be different from the first direction D1. For example, the second direction D2 may be perpendicular to the first direction D1.

In an embodiment, the number of gate electrode lines connected to one gate electrode may be the same as the number of kernels included in one kernel series. For example, when one kernel series includes 64 kernels, the number of gate electrode lines connected to one gate electrode may be 64.

A corresponding gate voltage may be applied to each gate electrode. For example, the first gate voltage VG1 may be applied to the first gate electrode GE1 and the plurality of first gate electrode lines GEL1-1 to GEL1-64, the second gate voltage VG2 may be applied to the second gate electrode GE2 and the plurality of the second gate electrode lines GEL2-1 to GEL2-64, the third gate voltage VG3 may be applied to the third gate electrode GE3 and the plurality of third gate electrode lines GEL3-1 to GEL3-64, and the fourth gate voltage VG4 may be applied to the fourth gate electrode GE4 and the plurality of fourth gate electrode lines GEL4-1 to GEL4-64.

The first to fourth gate electrodes correspond to the first to fourth kernel series (refer to FIG. 2). One line in each gate electrode line corresponds to one kernel. For example, the plurality of first gate electrode lines GEL1-1 to GEL 1-64 connected to the first gate electrode may correspond to a plurality of kernels of the first kernel series. For example, an i-th gate electrode line GEL1-i among the 64 first gate electrode lines GEL1-1 to GEL1-64 may correspond to an i-th kernel among the 64 kernels of the first kernel series.

The gate electrode line and the gate electrode may include a conductive material. For example, the conductive material may include the silicon "Si" element. For example, the conductive material may include a silicon substrate doped with an n-type semiconductor or a p-type semiconductor.

The synapse array circuit 131-1 may include a plurality of cell strings. The first to fourth cell strings CS1 to CS4 may correspond to the first to fourth kernel series (refer to FIG. 2). For example, the first cell strings CS1 may correspond to a plurality of kernels of the first kernel series. In each cell string, one cell string may correspond to one kernel. For example, an i-th cell string CS1-i among 64 first cell strings CS1-1 to CS1-64 may correspond to an i-th kernel among the 64 kernels of the first kernel series.

The number of first cell strings CS1-1 to CS1-64 may be the same as the number of kernels of the first kernel series, the number of second cell strings CS2-1 to CS2-64 may be the same as the number of kernels of the second kernel series, the number of third cell strings CS3-1 to CS3-64 may be the same as the number of kernels of the third kernel series, and the number of fourth cell strings CS4-1 to CS4-64 may be the same as the number of kernels of the fourth kernel series.

A plurality of cell strings may be connected to the corresponding gate electrode lines. For example, the first cell strings CS1-1 to CS1-64 may be connected to the first gate electrode lines GEL1-1 to GEL1-64, the second cell strings CS2-1 to CS2-64 may be connected to the second gate electrode lines GEL2-1 to GEL2-64, the third cell strings CS3-1 to CS3-64 may be connected to the third gate electrode lines GEL3-1 to GEL3-64, and the fourth cell strings CS4-1 to CS4-64 may be connected to the fourth gate electrode lines GEL4-1 to GEL4-64.

Each of the plurality of cell strings may include a plurality of synapse elements SD. The synapse elements SD of the plurality of cell strings may store information about components of the corresponding kernel. The synapse elements of one cell string may store information about the components of one kernel.

For example, the synapse elements of one first cell string may store information about the components of one kernel among the plurality of kernels of the first kernel series, the synapse elements of one second cell string may store information about the components of one kernel among the plurality of kernels of the second kernel series, the synapse elements of one third cell string may store information about the components of one kernel among the plurality of kernels of the third kernel series, and the synapse elements of one fourth cell string may store information about the components of one kernel among the plurality of kernels of the fourth kernel series.

Each of the plurality of synapse elements SD may store information about one component of the corresponding kernel. For example, one synapse element of one first cell string may store information about one component of one kernel of the first kernel series. When an input voltage and a gate voltage are applied to each synapse element, the synapse element may generate an output current based on information about the stored kernel component.

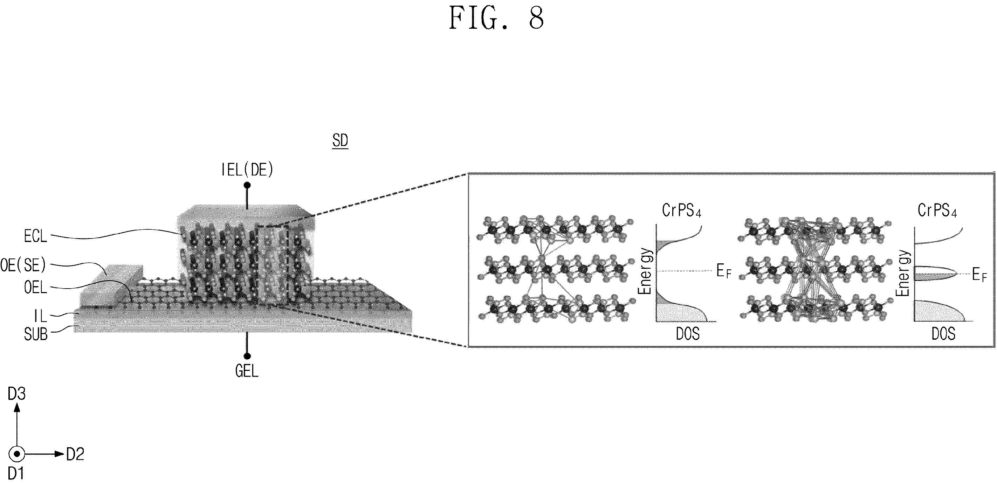

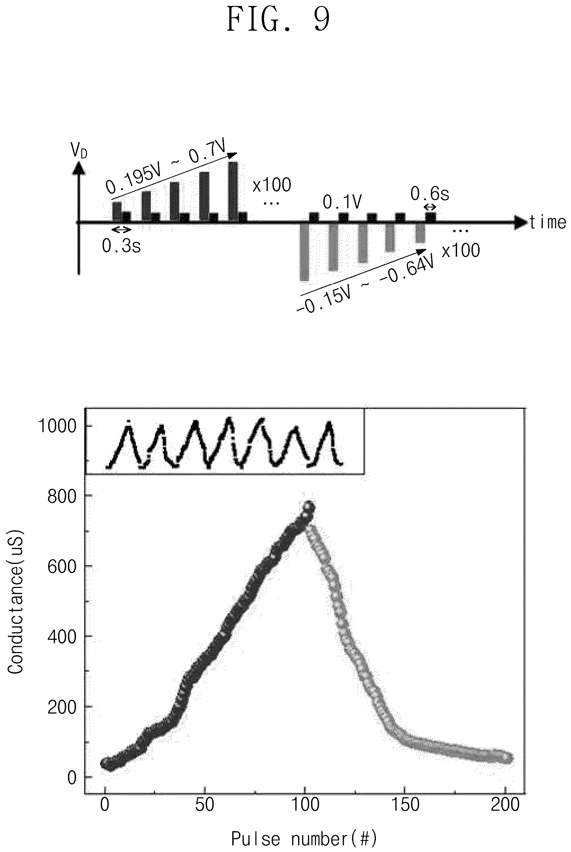

In an embodiment, the synapse element SD may include a three-terminal memristor element. The synapse element SD may include a drain terminal connected to an input electrode line, a gate terminal connected to a gate electrode line, and a source terminal connected to an output electrode line. The detail structure and operation of the synapse element SD will be described later with reference to FIGS. 8 and 9.

Each of the plurality of cell strings may be connected to a plurality of input electrode lines. For example, the first cell strings CS1 may be connected to the first to 27th input electrode lines IEL1 to IEL27, the second cell strings CS2 may be connected to the first to 27th input electrode lines IEL1 to IEL27, the third cell strings CS3 may be connected to the first to 27th input electrode lines IEL1 to IEL27, and the fourth cell strings CS4 may be connected to the first to 27th input electrode lines IEL1 to IEL27.

In each cell string, the plurality of synapse elements SD may be arranged in the second direction D2. Each synapse element SD may be disposed at a position where the input electrode line intersects the gate electrode line. The synapse element SD may be connected to an output electrode line that intersects the input electrode line. In an embodiment, the plurality of synapse elements SD may be arranged on a 2D plane defined by the first direction D1 and the second direction D2. For example, the plurality of synapse elements SD may be arranged in a crossbar shape.

The synapse array circuit 131-1 may include a plurality of output electrode lines. The plurality of output electrode lines may include first to fourth output electrode lines OEL1 to OEL4 corresponding to the first to fourth cell strings CS1 to CS4. A plurality of first output electrode lines OEL1-1 to OEL1-64 may be connected to the plurality of first cell strings CS1-1 to CS1-64, a plurality of second output electrode lines OEL2-1 to OEL2-64 may be connected to the plurality of second cell strings CS2-1 to CS2-64, the plurality of third output electrode lines OEL3-1 to OEL3-64 may be connected to the plurality of third cell strings CS3-1 to CS3-64, and a plurality of fourth output electrode lines OEL4-1 to OEL4-64 may be connected to the plurality of fourth cell strings CS4-1 to CS4-64.

One output electrode line may be connected to a plurality of synapse elements of one cell string. For example, one first output electrode line may be connected to a plurality of synapse elements of one first cell string, one second output electrode line may be connected to a plurality of synapse elements of one second cell string, one third output electrode line may be connected to a plurality of synapse elements of one third cell string, and one fourth output electrode line may be connected to a plurality of synapse elements of one fourth cell string.

The synapse array circuit 131-1 may include a plurality of output electrodes. The plurality of output electrodes may include first to fourth output electrodes OE1 to OE4 corresponding to the first to fourth output electrode lines OEL1 to OEL4. A plurality of first output electrodes OE1-1 to OE1-64 may be connected to the plurality of first output electrode lines OEL1-1 to OEL1-64, a plurality of second output electrodes OE2-1 to OE2-64 may be connected to the plurality of second output electrode lines OEL2-1 to OEL2-64, a plurality of third output electrodes OE3-1 to OE3-64 may be connected to the plurality of third output electrode lines OEL3-1 to OEL3-64, and a plurality of fourth output electrodes OE4-1 to OE4-64 may be connected to the plurality of fourth output electrode lines OEL4-1 to OEL4-64.

The output electrode line and the output electrode may include a conductive material. For example, the output electrode line may include a graphene structure material, and the output electrode may include gold "Au" or chromium "Cr" elements.

A current output from a plurality of synapse elements of one cell string may be output through one output electrode. For example, as a plurality of input voltages and a plurality of gate voltages are applied to a plurality of synapse elements of one cell string, a convolution computing may be performed on one kernel corresponding to one cell string, and as a result, a current may be output from one output electrode.

For example, in the first cell string CS1-1 among the 64 first cell strings CS1-1 to CS1-64, a current may be output as a result of performing a convolution computing between the first kernel among the 64 kernels of the first kernel series and the input data IP. Likewise, in an i-th (where, "i" is any natural number from 1 to 64) cell strings among the 64 n-th (where, "n" is any natural number from 1 to 4) cell strings, a current may be output as a result of performing a convolution computing between the i-th kernel among the 64 kernels of the n-th kernel series and the input data IP.

One of the plurality of first output electrodes OE1-1 to OE1-64, one of the plurality of second output electrodes OE2-1 to OE2-64, one of the plurality of third output electrodes OE3-1 to OE3-64, and one of the plurality of fourth output electrodes OE4-1 to OE4-64 may be connected to each other. A plurality of output currents OC1 to OC64 may be output from a plurality of output electrodes connected to each other in the synapse array circuit.

For example, the first output electrode OE1-1 among the plurality of first output electrodes, the first output electrode OE2-1 among the plurality of second output electrodes, the first output electrode OE3-1 among the plurality of third output electrodes, and the first output electrode OE4-1 among the plurality of fourth output electrodes may be connected to each other. The first output current OC1 may be output from the first output electrodes connected to each other among the plurality of first to fourth output electrodes.

Likewise, an i-th output electrode OE1-i among the plurality of first output electrodes, an i-th output electrode OE2-i among the plurality of second output electrodes, an i-th output electrode OE3-i among the plurality of third output electrodes, and an i-th output electrode OE4-i among the plurality of fourth output electrodes may be connected to each other. The i-th output current OCi may be output from the i-th output electrodes connected to each other among the plurality of first to fourth output electrodes.

FIG. 8 is a diagram illustrating a synapse element in an embodiment of FIG. 7.

Referring to FIG. 8, the synapse element SD may store data in the form of electrical resistance. For example, the synapse element SD may be a three-terminal memristor element including a drain terminal DE, a source terminal SE, and a gate terminal. The drain terminal DE may be an input electrode line IEL, the source terminal SE may be the output electrode OE, and the gate terminal may be the gate electrode line GEL. The synapse element SD may be a three-terminal memristor element connected to the input electrode line IEL, the gate electrode line GEL, and the output electrode OE.

The synapse element SD may include an electrical resistance layer ECL provided on a substrate SUB. The input electrode line IEL may be provided on the electrical resistance layer ECL. The output electrode line OEL and the gate electrode line GEL may be provided under the electrical resistance layer ECL. The substrate SUB, an insulating layer IL, the output electrode line OEL, the electrical resistance layer ECL, and the input electrode line IEL may be sequentially provided along a third direction D3 on the gate electrode line GEL. The third direction D3 may be perpendicular to both the first direction D1 and the second direction D2. The output electrode OE may be disposed on the output electrode line OEL. The output electrode OE and the electrical resistance layer ECL may be spaced apart from each other.

The electrical resistance layer ECL may include a resistive material. For example, the resistive material may include chromium sulfide. In an embodiment, the resistive material may include a CrPS4 structure in which chromium and sulfur atoms are arranged in the form of a layer.

The resistance or the electrical conductivity of the electrical resistance layer ECL may be determined depending on the coupling strength of the conductive bridge arising from the input electrode line IEL. For example, a filament including the silver "Ag" element, which represents a conductive bridge, may be formed between the input electrode line IEL including the silver "Ag" element and the electrical resistance layer ECL. The resistance or the electrical conductivity of the electrical resistance layer ECL may be determined based on the strength of the connection between the filament and the output electrode line OEL including a graphene.

FIG. 9 is a graph illustrating an example of applying a program voltage to a synapse element of FIG. 8.

Referring to FIGS. 8 and 9, in a program phase, a program voltage may be applied to the drain terminal DE. While the program voltage is applied, a uniform voltage may be applied to the source terminal SE and the gate terminal.

While the number of pulses applied to the drain terminal DE increases from 0 to 100, a positive program voltage may be applied to the drain terminal DE. For example, the program voltage may be gradually increased from 0.195V to 0.7V. As the positive program voltage is applied to the drain terminal DE, the electrical conductivity of the electrical resistance layer ECL may increase.

While the number of pulses applied to the drain terminal DE increases from 101 to 200, a negative program voltage may be applied to the drain terminal DE. For example, the program voltage may be gradually increased from -0.65V to -0.15V. As the negative program voltage is applied to the drain terminal DE, the electrical conductivity of the electrical resistance layer ECL may decrease.

The magnitude of the electrical conductivity of the electrical resistance layer ECL may increase or decrease linearly depending on the magnitude of the program voltage applied to the drain terminal DE. Using these characteristics, the electrical resistance value corresponding to the value of the kernel component may be set with respect to the electrical resistance layer ECL of the synapse element SD of FIGS. 7 and 8. For example, the resistance value of the electrical resistance layer ECL may be set small such that the synapse element SD generates a high output current. In detail, programming may be done by applying a large positive voltage to the drain terminal DE such that the electrical resistance layer ECL of the synapse element SD has high electrical conductivity. As another example, the resistance value of the electrical resistance layer ECL may be set high such that the synapse element SD generates a low output current. In detail, the programming may be done by applying a small positive voltage (or a negative voltage) to the drain terminal DE such that the electrical resistance layer ECL of the synapse element SD has a low electrical conductivity.

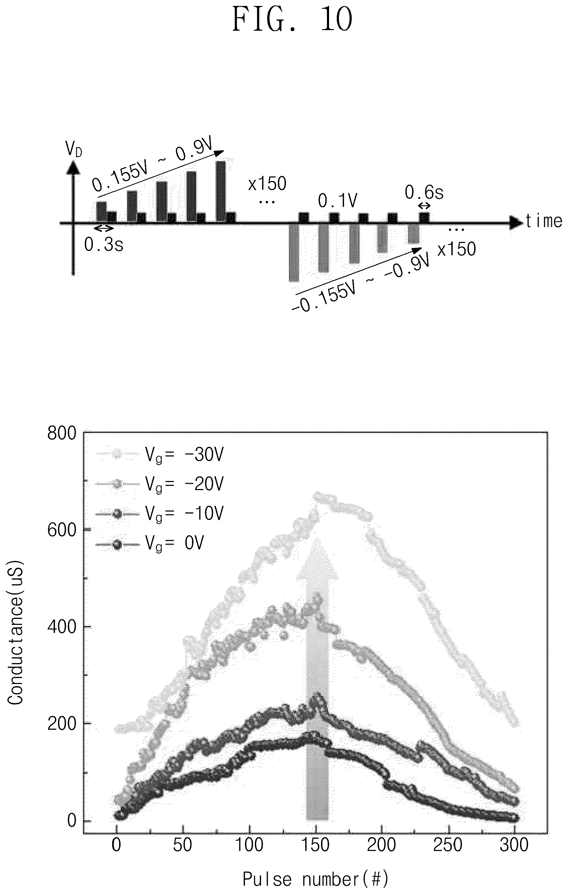

FIG. 10 is a graph illustrating an example of applying a gate voltage to a synapse element of FIG. 8.

Referring to FIGS. 8, 9, and 10, the electrical conductivity of the synapse element SD may be controlled by applying a gate voltage "Vg" to the programmed synapse element SD.

The electrical conductivity of the synapse element SD may vary depending on the magnitude of the gate voltage Vg applied to the gate terminal of the synapse element SD. For example, when a larger gate voltage Vg is applied to the gate terminal of the synapse element SD, the electrical resistance layer ECL of the synapse element SD may have a higher electrical conductivity. As another example, when a smaller gate voltage Vg is applied to the gate terminal of the synapse element SD, the electrical resistance layer ECL of the synapse element SD may have a smaller electrical conductivity.

The magnitude of the electrical conductivity of the electrical resistance layer ECL may increase or decrease linearly depending on the magnitude of the gate voltage Vg applied to the gate terminal. An electrical resistance value corresponding to a value obtained by multiplying the value of the kernel component by the attention weight value may be set with respect to the electrical resistance layer ECL of the synapse element SD of FIGS. 7 and 8.

Using these characteristics, it is possible to implement applying the first to fourth attention weights to the first to fourth kernels.

For example, assigning the first attention weight to the first kernel may be implemented by applying the first gate voltage Vg to the first gate electrode line GEL1 connected to the first cell string. For example, assigning the second attention weight to the second kernel may be implemented by applying the second gate voltage Vg to the second gate electrode line GEL2 connected to the second cell string. For example, assigning the third attention weight to the third kernel may be implemented by applying the third gate voltage Vg to the third gate electrode line GEL3 connected to the third cell string. For example, assigning the fourth attention weight to the fourth kernel may be implemented by applying the fourth gate voltage Vg to the fourth gate electrode line GEL4 connected to the fourth cell string.

According to an embodiment of the present disclosure, a device for performing computation of a dynamic convolution neural network is provided.

Embodiments are set out in the following Clauses:

Clause 1. A neuromorphic computing device comprising:

an input voltage generator configured to generate a plurality of input voltages based on input data;

a gate voltage generator configured to generate a plurality of gate voltages based on the input data; and

a convolution computing device including a synapse array circuit to which the plurality of input voltages and the plurality of gate voltages are applied, and

wherein the synapse array circuit includes a plurality of synapse elements, and

wherein the synapse element is a memristor element including a drain terminal to which one of the plurality of input voltages is applied, a gate terminal to which one of the plurality of gate voltages is applied, and a source terminal connected to an output electrode line.

Clause 2. The neuromorphic computing device of clause 1, wherein the input voltage generator includes:

a first processor configured to generate a plurality of input signals including information about a plurality of components of the input data; and

a first voltage generator configured to generate the plurality of input voltages based on the plurality of input signals, and

wherein a magnitude of each of the plurality of input voltages is determined based on the corresponding input signal.

Clause 3. The neuromorphic computing device of clause 2, wherein the first processor further includes a window controller configured to set a window on the input data, and

wherein the first processor is configured to generate the plurality of input signals based on components belonging to the window in the input data.

Clause 4. The neuromorphic computing device of any preceding clause, wherein the gate voltage generator includes:

a second processor configured to classify the input data into a plurality of classes and to generate the plurality of gate signals based on the classification results; and

a second voltage generator configured to generate the plurality of gate voltages based on the plurality of gate signals, and

wherein a number of the plurality of gate signals is the same as a number of the plurality of classes.

Clause 5. The neuromorphic computing device of clause 4, wherein the second processor includes a classifier configured to generate a plurality of attention weight information by applying an attention layer to the input data, and

wherein the second processor is configured to generate the plurality of gate signals based on the plurality of attention weight information.

Clause 6. The neuromorphic computing device of any preceding clause, wherein the synapse array circuit includes:

a plurality of input electrode lines to which the plurality of input voltages are applied; and

a plurality of gate electrode lines to which the plurality of gate voltages are applied, and

wherein each of the plurality of synapse elements is disposed at a position where one of the plurality of input electrode lines intersects one of the plurality of gate electrode lines.

Clause 7. The neuromorphic computing device of clause 6, wherein the input electrode line includes silver (Ag) element.

Clause 8. The neuromorphic computing device of clause 7, wherein the plurality of gate electrode lines include a first gate electrode line and a second gate electrode line, and
wherein the synapse array circuit includes:

a first output electrode line connected to synapse elements connected to the first gate electrode line; and
a second output electrode line connected to synapse elements connected to the second gate electrode line.

Clause 9. The neuromorphic computing device of clause 8, wherein the first output electrode line and the second output electrode line include a graphene structural material.

Clause 10. The neuromorphic computing device of clause 9, wherein the synapse element includes an electrical resistance layer, and
wherein the electrical resistance layer includes a CrPS4 structure in which chromium and sulfur atoms are arranged in a layer form.

Clause 11. A device of performing a dynamic convolution computing, the device comprising:

a plurality of input electrodes to which a plurality of input voltages are applied;
a plurality of input electrode lines connected to the plurality of input electrodes;
a plurality of gate electrodes to which a plurality of gate voltages are applied;
a plurality of gate electrode lines connected to the plurality of gate electrodes;
a plurality of synapse elements connected to the plurality of gate electrode lines and the plurality of input electrode lines; and
a plurality of output electrode lines connected to the plurality of synapse elements, and
wherein the plurality of input voltages include information about a plurality of components of input data,
wherein the plurality of synapse elements include information about a plurality of components of a kernel, and
wherein the plurality of gate voltages include a plurality of attention weight information.

Clause 12. The device of clause 11, further comprising:

a first processor configured to generate a plurality of input signals including information about components belonging to a window on the input data; and
a first voltage generator configured to generate the plurality of input voltages based on the plurality of input signals.

Clause 13. The device of clause 12, further comprising:

a second processor configured to generate the plurality of attention weight information by applying an attention layer to the input data and to generate a plurality of gate signals based on the plurality of attention weight information; and
a second voltage generator configured to generate the plurality of gate voltages based on the plurality of gate signals.

Clause 14. The device of clause 13, wherein a number of the plurality of gate voltages is the same as a number of the plurality of attention weight information.

Clause 15. The device of clause 14, wherein the input electrode line includes silver (Ag) element.

Clause 16. The device of clause 15, wherein the output electrode line includes a graphene structural material.

Clause 17. The device of any of clauses 14-16, wherein the synapse element includes an electrical resistance layer, and
wherein, the electrical resistance layer includes a CrPS4 structure in which chromium and sulfur atoms are arranged in a layer form.

Clause 18. The device of clause 17, wherein first synapse elements having the same number as the number of the plurality of components of the kernel are connected to each of the plurality of output electrode lines.

Clause 19. The device of clause 18, wherein a resistance value of the electrical resistance layer of each of the first synapse elements is set to correspond to a value of the corresponding component among the plurality of components of the kernel.

Clause 20. The device of clause 19, wherein an electrical conductivity of the electrical resistance layer of each of the plurality of synapse elements increases and decreases depending on a magnitude of the gate voltage applied to each of the plurality of synapse elements.

The above descriptions are detail embodiments for carrying out the present disclosure. Embodiments in which a design is changed simply or which are easily changed may be included in the present disclosure as well as an embodiment described above. In addition, technologies that are easily changed and implemented by using the above embodiments may be included in the present disclosure. Therefore, the scope of the present disclosure should not be limited to the above-described embodiments and should be defined by not only the claims to be described later, but also those equivalent to the claims of the present disclosure.

**Claims**

1. A neuromorphic computing device comprising:

    an input voltage generator configured to generate a plurality of input voltages based on input data;
    a gate voltage generator configured to generate a plurality of gate voltages based on the input data; and
    a convolution computing device including a synapse array circuit to which the plurality of input voltages and the plurality of gate voltages are applied, and
    wherein the synapse array circuit includes a plurality of synapse elements, and
    wherein the synapse element is a memristor element including a drain terminal to which one of the plurality of input voltages is applied, a gate terminal to which one of the plurality of gate voltages is applied, and a source terminal connected to an output electrode line.

2. The neuromorphic computing device of claim 1, wherein the input voltage generator includes:

    a first processor configured to generate a plurality of input signals including information about a plurality of components of the input data; and
    a first voltage generator configured to generate the plurality of input voltages based on the plurality of input signals, and
    wherein a magnitude of each of the plurality of input voltages is determined based on the corresponding input signal.

3. The neuromorphic computing device of claim 2, wherein the first processor further includes a window controller configured to set a window on the input data, and
    wherein the first processor is configured to generate the plurality of input signals based on components belonging to the window in the input data.

4. The neuromorphic computing device of any preceding claim, wherein the gate voltage generator includes:

    a second processor configured to classify the input data into a plurality of classes and to generate the plurality of gate signals based on the classification results; and
    a second voltage generator configured to generate the plurality of gate voltages based on the plurality of gate signals, and
    wherein a number of the plurality of gate signals is the same as a number of the plurality of classes.

5. The neuromorphic computing device of claim 4, wherein the second processor includes a classifier configured to generate a plurality of attention weight information by applying an attention layer to the input data, and
    wherein the second processor is configured to generate the plurality of gate signals based on the plurality of attention weight information.

6. The neuromorphic computing device of any preceding claim, wherein the synapse array circuit includes:

    a plurality of input electrode lines to which the plurality of input voltages are applied; and
    a plurality of gate electrode lines to which the plurality of gate voltages are applied, and
    wherein each of the plurality of synapse elements is disposed at a position where one of the plurality of input electrode lines intersects one of the plurality of gate electrode lines.

7. The neuromorphic computing device of claim 6, wherein the plurality of gate electrode lines include a first gate electrode line and a second gate electrode line, and
    wherein the synapse array circuit includes:

    a first output electrode line connected to synapse elements connected to the first gate electrode line; and
    a second output electrode line connected to synapse elements connected to the second gate electrode line.

8. A device of performing a dynamic convolution computing, the device comprising:

    a plurality of input electrodes to which a plurality of input voltages are applied;
    a plurality of input electrode lines connected to the plurality of input electrodes;
    a plurality of gate electrodes to which a plurality of gate voltages are applied;
    a plurality of gate electrode lines connected to the plurality of gate electrodes;
    a plurality of synapse elements connected to the plurality of gate electrode lines and the plurality of input electrode lines; and
    a plurality of output electrode lines connected to the plurality of synapse elements, and
wherein the plurality of input voltages include information about a plurality of components of input data,
wherein the plurality of synapse elements include information about a plurality of components of a kernel, and
wherein the plurality of gate voltages include a plurality of attention weight information.

9. The device of claim 8, further comprising:

a first processor configured to generate a plurality of input signals including information about components belonging to a window on the input data; and
a first voltage generator configured to generate the plurality of input voltages based on the plurality of input signals.

10. The device of claim 8 or claim 9, further comprising:

a second processor configured to generate the plurality of attention weight information by applying an attention layer to the input data and to generate a plurality of gate signals based on the plurality of attention weight information; and
a second voltage generator configured to generate the plurality of gate voltages based on the plurality of gate signals.

11. The device of claim 10, wherein a number of the plurality of gate voltages is the same as a number of the plurality of attention weight information.

12. The device of claim 11, wherein the synapse element includes an electrical resistance layer, and wherein, the electrical resistance layer includes a CrPS4 structure in which chromium and sulfur atoms are arranged in a layer form.

13. The device of claim 12, wherein first synapse elements having the same number as the number of the plurality of components of the kernel are connected to each of the plurality of output electrode lines.

14. The device of claim 13, wherein a resistance value of the electrical resistance layer of each of the first synapse elements is set to correspond to a value of the corresponding component among the plurality of components of the kernel.

15. The device of claim 14, wherein an electrical conductivity of the electrical resistance layer of each of the plurality of synapse elements increases and decreases depending on a magnitude of the gate voltage applied to each of the plurality of synapse elements.

FIG. 1

# FIG. 2

DCL1

AP

IP:32x32x3

KS1:3x3x64
KS2:3x3x64
KS3:3x3x64
KS4:3x3x64

CD1:32x32x64

EP 4 610 885 A2

FIG. 3

# FIG. 4

# FIG. 5

110

111

112

Processor1

111-1

IP →

Window
Controller

IS1 → Voltage Generator1 → Vx1
IS2 → → Vx2
⋮
IS25 → → Vx25
IS26 → → Vx26
IS27 → → Vx27

⋮

# FIG. 6

120

121

122

Processor2

121-1

IP →

Classifier

GS1 → Voltage Generator2 → VG1
GS2 → → VG2
GS3 → → VG3
GS4 → → VG4

FIG. 7

EP 4 610 885 A2

# FIG. 8

EP 4 610 885 A2

# FIG. 9

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240029909

- KR 1020240057753